(19) Europäisches Patentamt

European Patent Office

Office européen des brevets

(11) Publication number: **0 439 112 B1**

# EUROPEAN PATENT SPECIFICATION

(45) Date of publication of patent specification: **25.10.95**

(51) Int. Cl.6: **C09D 5/36**, B05D 5/06

(21) Application number: **91100740.9**

(22) Date of filing: **22.01.91**

(54) **Subtle patina metallic coatings containing guanine.**

(30) Priority: **23.01.90 US 468625**

(43) Date of publication of application:
**31.07.91 Bulletin 91/31**

(45) Publication of the grant of the patent:
**25.10.95 Bulletin 95/43**

(84) Designated Contracting States:
**AT BE CH DE DK ES FR GB GR IT LI LU NL SE**

(56) References cited:
**US-A- 3 728 329**

**DATABASE WPIL, no. 82-01 814, DERWENT
PUBLICATIONS LTD., London, GB; & SU-A-
899 611**

(73) Proprietor: **BASF Corporation
Inmont Division,
1255 Broad Street,
P.O. Box 6001
Clifton,
New Jersey 07015-6001 (US)**

(72) Inventor: **Panush, Sol
28670 Oak Crest Drive
Farmington Hills,
Michigan 48018 (US)**
Inventor: **Gelmini, James M.
32453 Revere Drive
Warren,
Michigan 48092 (US)**

(74) Representative: **Münch, Volker, Dr. et al
BASF Lacke + Farben AG
Patente/Lizenzen/Dokumentation
Postfach 61 23
D-48136 Münster (DE)**

Rank Xerox (UK) Business Services
(3.10/3.09/3.3.3)

## Description

This invention relates generally to opalescent coatings containing guanine which exhibit a subtle patina metallic effect, a method of coating a substrate with at last two layers of protecting coatings and substrates coated with at last two layers of protecting coatings. More specifically, the coating compositions described herein are useful for coating autobody parts in the form of multicoat systems.

BACKGROUND OF INVENTION

Automotive coating compositions exhibiting a metallic appearance are well liked by the public. The metallic appearance can be produced by using a metallic pigment such as metal flake in the coating composition. A metallic appearance can also be produced by the inclusion of metallic-like pigments such as metal oxide coated mica pigment in the coating composition, as disclosed in U.S.Pat. Nos. 4,499,143, 4,605,687, and 4,598,015, which are incorporated by reference.

Multicoat coating compositions comprising a pigmented basecoat and at least one clear topcoat are described in, for example, U.S. Pat. Nos.4,705,839, and 4,791,168. The use of a basecoat-clear topcoat multicoat coating system results in improved aesthetic appearance along with improved resistance to weathering and damage. Systems using three or more coats are described in, for example, U.S. Pat. no.4,539,258. These systems tend to exhibit improved aesthetic appearance over the two-coat systems.

Multicoat systems also in general tend to exhibit superior properties over single coat systems. For example, in automotive finishes, the pigment control properties of polyurethane binders can be combined with the chemical resistance properties of a thermosetting acrylic clearcoat which is then applied over a pigmented thermoplastic polyurethane basecoat. Likewise, in appliance finishes, the chemical resistance of polyester resins can be combined with a lower coat of thermosetting acrylic resin by applying a polyester clear topcoat over a pigmented thermosetting acrylic basecoat. Although any of the above-mentioned thermoplastic materials may be used to form the transparent topcoat, better durability is achieved if the topcoat is one of the above-cited thermosetting materials and a cross-linking agent.

In the one-coat system, no clearcoat or topcoat is applied. This more economical process is most useful on trucks, buses and fleet car body parts.

Automotive coating compositions exhibiting an opalescent color effect are also well liked by the public. An opalescent effect may be produced with a three layer coating comprising an inner basecoat or primer coat having an N-4 to N-8 value on the Munsell color chart, an interference or intermediary coat containing metal oxide encapsulated mica particles and having a pigment to binder ratio of 0.06 to 0.13, and a clear outer topcoat. These opalescent coating systems are disclosed, for example in U.S. Pat. No. 4,539,258 and U.S. Pat. No.4,615,940 which are incorporated herein by reference. The application of three separate paint layers, however, makes the coating process more complex and more expensive than the two-coat process.

An opalescent color effect can be produced in a two-coat system using coating compositions comprising a thermoplastic or thermosetting resin, a transparent metal oxide pigment having a particle size of about 20nm to about 30nm and a metallic or metallic-like pigment. These opalescent coating compositions are disclosed, for example, in U.S. Pat. No. 4,753,829 {Prior Panush patent}, which is also incorporated herein by reference. However, the opalescence so produced may exhibit sharp and distinct colors having dramatic and unnatural complimentary color shifts and color travel.

Accordingly, there has been a need in this art for simplified methods of producing opalescence which result in more natural hues, softer colors and minimal color travel.

SUMMARY OF THE INVENTION

It has been found that coating compositions comprising a binder, guanine, other substantially transparent pigments, and optionally metal or metal like pigments, substantially free of other pigments, in wich the guanine to total pigment ratio is between 0.10 and 0.70 and the pigment to binder ratio is between 0.04 and 0.35 and coating compositions comprising a binder, guanine, and a black pigment, substantially free of other pigments, in wich the guanine to total pigment ratio is between 0.10 and 0.70 and the pigment to binder ratio is between 0.04 and 0.35 produce unique and novel opalescent color effects, exhibiting a subtle patina effect. Guanine containing pigments exhibit more natural hues, softer colors and minimal color travel on a soft patina background. These improved opalescent characteristics are in contrast to conventional opalescence, which produces sharp-distinct colors with dramatic and unnatural complimentary color shifts and color travel.

US-A-3,728,329 is concerned with a process for producing pearl essences. Coating compositions containing mixtures of guanine and other substantially transparent pigments or mixtures of guanine and black pigments which are useful for the production of coatings with unique and novel opalescent color effects, exhibiting more natural hues, softer colors and minimal color travel on a soft patina background are not disclosed in US-A-3,728,329.

Guanine, available commercially as a mixture of guanine and hypoxanthine crystals in isopropyl alcohol from EM Industries Inc. (Catalog No. 017352) is useful for producing opalescent effects in certain coating compositions. See, e.g., "Nacreous (Pearlescent) Pigments and Interference Pigments", by L.M. Greenstein in Pigment Handbook, Volume 1, Ed. P.A. Lewis (Wiley 1988). However, in prior compositions, as described in M.G. DeNavarre, The Chemistry and Manufacture of Cosmetics, 4, 996-998 (2d Ed.), Kirk-Othmer Encyclopaedia of Chemical Technology 17:833 (1982) and U.S. Patent Nos. 4,158,053, 4,740,370, 4,749,564, and 4,864,294 and Japanese Patents Nos. 55066978, 63100468, 6129246, 60167991 guanine functions interchangeably with pearlescent pigments. Moreover, guanine crystals are almost transparent. Opalescent effects in automotive paints have thus far been achieved with semi-transparent pearlescent pigments, and transparent particles have proven to be of little or no use.

Surprisingly, it has been found that the substantially transparent guanine crystals can add a unique opalescent effect to automotive paints, achieving a subtle patina not possible with other pearlescent pigments. Guanine adds its unique effect to transparent pigments while surprisingly exhibiting good hiding power and durability.

Whether in a two-coat or three-coat system, the introduction of guanine intensifies the color of transparent pigments, in contrast to metal or metal-like pigments which are respectively additive or subtractive contributors to the color, i.e., contributing synergistically and/or antagonistically. Guanine increases the chromaticity of the underlying color and generates a metallic effect with little or no specular reflection, totally void of the bright-to-gray (rich face to dark flop) color travel associated with "state of the art" automotive metallic finishes.

The unique color effect created by guanine appears to be related to its inherent transparency. The ability of guanine to reflect light closely matches the background of the surrounding medium resulting in a soft and subtle metallic patina which modifies the basecoat colors while accurately transmitting even highly chromatic colors.

One aspect of the present invention involves a multi-coat system exhibiting improved opalescence, comprising at least a pigmented basecoat, an interference coat containing guanine, transparent organic or inorganic pigments, and metal or metal-like pigments, and a transparent topcoat.

Another aspect of the present invention involves a coating composition for producing a novel opalescent color effect which adds a subtle patina to the coated article comprising a binder, guanine, other substantially transparent pigments, and optionally metal or metal like pigments, substantially free of other pigments, in wich the guanine to total pigment ratio is between 0.10 and 0.70 and the pigment to binder ratio is between 0.04 and 0.35 and a coating composition for producing a novel opalescent color effect which adds a subtle patina to the coated article comprising a binder, guanine, and a black pigment, substantially free of other pigments, in wich the guanine to total pigment ratio is between 0.10 and 0.70 and the pigment to binder ratio is between 0.04 and 0.35.

Another aspect of the present invention involves a substrate material coated with at last two layers of protective coatings comprising

(1) a basecoat;

(2) optionally an interference coat; and

(3) a substantially transparent topcoat , wherein the basecoat or the interference coat is formed by a coating composition according to the present invention.

Yet another aspect of the invention involves a method of coating a substrate with at last two layers of protective coatings comprising

(1) applying a basecoat;

(2) optionally applying an interference coat; and

(3) applying a substantially transparent topcoat onto the basecoat respectively onto the interference coat, wherein a coating composition according to the present invention is applied as basecoat or as interference coat.

## DETAILED DESCRIPTION

The following terms are used throughout the specification and in the appended claims, and have the meaning set forth below, as will be understood by those skilled in the art:

hue: the color appearance of a pigment, based upon its overall light wavelength distribution, such as described in the IES Lighting Handbook (1981), pp. 5-1 to 5-13. The first dimension in color space.

value:          lightness or darkness of a color; also referred to as "saturation." The second dimension in color space.

chromaticity:     the third axis in color space: hue (red,blue, yellow), value (light to dark),and chroma (vivid to dull).

Hue, value, and chromaticity are used to define a color.

face:           the color effect visible perpendicular to the viewing surface.

flash:          the color effect visible at about a 45 degree angle to the viewing surface.

flop:           the color effect visible on a angle almost parallel to the viewing surface.

travel:        difference in color observed at color  travel) different viewing angles.

undertone:     the color observed when viewing an object at an angle which is different from the color observed when viewing perpendicular to the object.

p/b:           pigment to binder ratio (w/w).

m/g:          metal and metal-like pigment to guanine ratio (w/w).

g/p:           guanine to total pigment ratio (w/w)

m/p:         metal and metal-like pigment to total pigment ratio (w/w).

While any substrate material can be coated with a coating composition according to the present invention, including but not limited to glass, ceramic, paper, wood, and even plastic material depending on the specific drying and/or curing requirements of the particular composition, the coating system of the present invention is particularly useful for metal substrates, and specifically as an automotive paint finish system. The substrate may be a bare substrate material or can be conventionally primed, for example to impart corrosion resistance. Examples of such metal substrates include steel, aluminum, copper, magnesium, and alloys thereof. The components of the composition can be varied to suit the temperature tolerance of the substrate material. For example, the components can be selected for air drying (i.e., ambient__, low temperature cure (e.g., 150°F. to 180°F.), or high temperature cure (e.g., over 180°F.).

The coating composition of the present invention can be used either as a pigmented topcoat, as a single coat system, as the basecoat of a pigmented basecoat/clear topcoat multicoat coating composition, or, preferrably, as an interference coat in a multicoat coating composition having at least three layers. Although the multilayer basecoat/interference coat/topcoat system is preferred, it will be appreciated that the coatings described herein can have utility as pigmented basecoats, and as pigmented coatings in general.

In the multicoat systems described herein, the pigmented basecoat composition is applied to a substrate to protect the substrate surface, to hide blemishes and to provide an aesthetically pleasing color. This is followed by application of an unpigmented layer of a polymer, which imparts a deep color appearance to the basecoat and renders durability to the pigmented basecoat. Other coating layers may then be applied if desired. Aesthetic quality is generally determined by the pigments in the basecoat.

This high solids non-metallic (metal free) basecoat is carefully designed for value (degree of darkness) and hue (undertone color). To produce the optimum in opalescence, the color value of the basecoat may be at specific values (e.g., N-4 to N-8) on the Munsell color chart. Preferably this value is N-5 to N-8 on the Munsell color chart and most preferably N-7.

The Munsell scale of values exhibits ten visually equal steps ranging between black (N-0) and white (N-10), the intermediate chips being dark to light grays. The Munsell value of a color is the same as that of the gray sample in the same row of the constant hue charts. Thus, in a red having the designation 5R 7/3, the "7" indicates the value which is equal to the gray N-7.

The color imparted to the basecoat may be coordinated with subsequently applied coating materials to produce an opalescent color effect. The pigmentation may be added to the polymer binder in amounts effective for producing an N-4 to N-8 value on the Munsell color chart. The hue of this basecoat can vary from yellow to blue as long as the N-4 to N-8 value is retained and has been adjusted for a color value away from the gray to achieve a desired color sensation. The yellow to blue hue observed in the N-4 to N-8 value range can be produced using any conventional pigmentation which produces such a color effect. Typically, the coloration is provided to the basecoat utilizing various combinations of transparent organic or inorganic pigments.

It is preferred to utilize the compositions of the present invention containing guanine crystals in a multicoat system comprising at least three layers: a pigmented basecoat, a semi-transparent interference coat, and a substantially transparent topcoat. The unique color effects caused by guanine are best seen in three coat systems where the transparency of the interference coat emphasizes the subtle guanine effect. In contrast to other interference coats containing metal or metal-like pigments which reflect, refract and absorb light, thus produce unique highlights and undertones that are a product of the metal or metal-like pigment in the interference coat, guanine enhances the true color of the basecoat, thus producing brilliant highly chromatic colors with a soft patina.

This interference coat is a transparent, light scattering layer which reflects and refracts each light wave as it enters the layer, allowing penetration of light to the basecoat, where it will be reflected back through the interference layer and again reflected and refracted before exiting the layer. The bending and redirection of the lightwaves as they pass through or bounce off the coated mica produces the myriad iridescence of color (like a soap bubble effect) that "floats" from hue to hue without any discernible break in the color (hue) transformation.

This interference (or sandwich) coat is a low pigment to binder transparent enamel containing the interference colorant at levels which effectively give rise to interference color effects without masking the color of the underlying pigmented basecoat.

Interference colors are achieved by adding small amounts of transparent pigments and/or metallic pigments or metal-like pigments, as disclosed in U.S. Patent 4,529,258.

The interference colors show one color on reflection and the complementary color on transmission. If the reflected color is red, the transmission color will be green and weaker in intensity. The transmission color can be seen if viewed at different angles. Both the angle of illumination and observation affect the color variations. The interference or sandwich coat is typically a semi-transparent, light scattering enamel, which allows the penetration of light waves to the basecoat where they can be reflected. The level of interference in this enamel may be carefully controlled between 0.001 p/b and 0.30 p/b interference pigments in the enamel. Conversely, should the level of the interference colorant exceed 0.30 p/b, the effective chromaticity of the interference coat may dominate the color and opalescence may be lost

For example:

(a) 0% to 0.001 p/b: interference color-maximum transparency, minimal interference, minimal opalescence are typically observed;

(b) 0.001 to 0.30 p/b: interference color-semi-transparency, optimum interference, optimum opalescence;

(c) 0.30 and up: interference color-maximum opacity and chroma, maximum interference, minimal opalescence are observed.

The interference coat is preferably formed by blending the selected interference color into the formulation at about 0.058 to 17.4 (weight percent) and applying this coat wet-on-wet over a 0.5 to 1.2 mil basecoat to a dry film build of about 1.0 mil +/- 0.2 mil. This package (basecoat and interference coat) with a total thickness of about 1.5 to about 2.4 mil will produce the optimum in opalescence, using the contrasting and/or complementary color process between basecoat and interference coat. The final layer may also contain the same polymers as above recited, with the caveat that the formulation should be totally transparent. This layer may contain ultraviolet light stabilizers or absorbers (e.g. hindered amines) to absorb and screen out ultraviolet radiation. This transparent clearcoat should be applied at about 1.0 +/- 0.2 mils dry film thickness.

The clearcoat should be applied wet-on-wet over the interference coat. Even though it is preferred to use the coating composition of the present invention as a pigmented basecoat overcoated with a semi-transparent interference coat and a clear topcoat, these compositions may also be used as pigmented topcoats and will exhibit opalescence which results in more natural hues, softer colors and minimal color travel. Any of the previously mentioned polymer systems for basecoats and clear topcoats may be used to form pigmented topcoats of the present invention. The clear topcoat may serve to magnify any imperfections and highlight any color deficiencies in the basecoat. Hence, it is important to have a uniform pigment dispersion in the basecoat, and to achieve uniform application of the basecoat on the substrate. The clear topcoat may also act as an ultraviolet magnifier, which can accelerate rather than retard ultraviolet light degradation of the pigment.

Similar effects can be realized in a two coat pigmented basecoat, clear topcoat, multicoat coating system. However, the necessity for high p/b ratios in the pigmented coat to provide requisite hiding power tends to reduce the chromaticity of the associated pigments and overwhelm the subtle patina effect of the guanine. Satisfactory effects can be achieved, however, with opaque black pigments (which can not exhibit a reduction in chromaticity), and with transparent pigments which allow the subtle guanine effects to be observed. The combination of transparent pigments and guanine crystals alone, do not generally exhibit satisfactory hiding power.

Metallic or metal-like pigments can be added to the guanine/transparent pigment compositions to enhance the hiding power of the guanine. The level of metallic or metal-like pigment must be controlled to avoid swamping the subtle color effects of the guanine. It has been found that m/g ratios of between about 0.005 and about 0.20 provide sufficient hiding power without destroying the aesthetic effect of the guanine.

The metallic pigments useful in the practice of the present invention include conventional metallic pigments such as metal flake, metal coated particles and the like. It is particularly preferred to use commercially available aluminum flake pigments in the form of pigment pastes such as SS5242R manufactured by Silberline, OBP8187 manufactured by Obron, and 720AR manufactured by U.S. Bronze. In addition to aluminum flake, other metal flake compositions may be used such as bronze flake, stainless steel flake, silver flake, and other precious metal flakes.

The metallic-like pigments useful in the present invention may comprise metal oxide coated mica particles. The metal oxides used as coatings can comprise ferric oxide, titanium dioxide, chromium hydroxide, and the like and combinations thereof. Examples of commercially available metal oxide coated mica pigments include 9-504 manufactured by E.M. Chemicals and MEARL Exterior Russet manufactured by MearlCorporation.

The coating compositions of the present invention may contain conventional transparent pigments typically used in coating compositions, both organic pigments such as perylenes, phthalocyanine blues and greens, quinacridones, imidazoles, benzimidazalones, etc. Transparent inorganic pigments such as transparent red and yellow iron oxides,etc, as disclosed in U.S. Pat. no. 4,017,448

Suitable binder resins for these pigments include, acrylic, urethane and polyester/polyurethane binders, as disclosed in U.S. Patents 4,487,869, 3,050,412, 3,198,759, 3,232,903, 3,255,135, 4,720,528, 4,705,839 4,600,737, 4,423,179, 4,341,678, 4,318,833, 4,317,895, 4,794,147, and 4,791,168.

Each of the above-recited polymers may be used as the topcoat in the form of a substantially transparent film. It is preferred that the transparent film be substantially colorless so that the full polychromatic and aesthetic effect of the basecoat is not substantially decreased. However, in some instances, desirable and unique styling effects can be obtained by the addition of contrasting or complementary colors to the topcoat. Another outstanding feature of the topcoat is the significant improvement in durability which is imparted to the overall coating composition.

The coating composition of the present invention when used as an automotive paint coating or other coating will comprise sufficient quantities of the required components and in amounts which are necessary to effectively cost and protect the metal or plastic substrate. It will be appreciated by one skilled in the art that the amounts of each component will vary with the desired color effect of the dried or cured coating as well as the type of coating.

A guanine-containing composition suitable for use in a two-coat system of the present invention, will typically exhibit a p/b ratio of between about 0.04 and and 0.35, and may vary dependent upon the particular vehicle. The p/b ratio of the basecoat is dependent on the color desired and should be designed to yield absolute hiding at about a 0.5 to 1.5 mil coating thickness.

The amount of guanine contained in the coating compositions suitable for use in a two-coat system of the present invention will typically comprise about 0.01 to about 0.99 g/p, and preferably from about 0.10 to about 0.70.

The amount of metal or metal-like pigment contained in the coating composition suitable for use in a two-coat system of the present invention will typically comprise from about 0.001 to about 0.50 m/p, and from about 0.01 to about 0.20 m/g.

A guanine-containing composition suitable for use in a three-coat system of the present invention, will typically exhibit a p/b ratio of between about 0.01 and and 0.30, and preferrably about 0.08 to 0.15. The g/p ratio will be from about 0.01 to about 0.99, and preferably from about 0.10 to about 0.70. The m/p ratio will be from about 0.001 to about 0.50, and the m/g ratio will be from about 0.01 to about 0.20.

The pigments tested exhibit a very soft metallic patina when combined in appropriate quantities with guanine, and exhibit about 300 to 400% increase in tint strength. Very strong development of undertone colors is also observed. Quinacridone develops a blue undertone; Phthalo Green a yellow undertone, Pthalo blue a red undertone, and transparent red iron oxide an orange or copper color. All colors, face, flash and flop were rich and clean.

The amount of cellulose acetate butyrate rheology control agent optionally present in the coatings of the present invention typically comprises about 2 wt% to about 20 wt%.

If the resin system is a thermosetting system, typically about 20 wt% to about 35 wt % of total solids of a cross-linking agent is added to the coating compositions.

The pigmented coating composition of the present invention is manufactured taking into account the processes described herein.

It should be noted that small amounts of acid can be added to initiate cross-linking when the coating is baked. The acids useful herein include para-toluene sulfonic acid as well as other acids. The acids are optionally present in amounts from about 0.5 - 1.5 wt. % based on the solid vehicle. It is also optional to add small quantities of UV absorbers to improve the ability of the cured film to withstand any detrimental effect of exposure to UV radiation over time. Typically about 0.25 to about 3.0 wt% (based on solids content) of a conventional, known UV absorber such as Tinuvin 328R, a substituted hydroxyphenyl benzotriazole, manufactured by Ciba-Geigy Corporation may be added to the basecoat or clearcoat.

The basecoat and the clear topcoat of the present invention can be applied to a substrate by any conventional method such as by brushing, spraying, dipping, flow coating, etc. Typically, spray application is used, especially for automotive coatings. Various types of spraying operations can be utilized, such as compressed air spraying, electrostatic spraying, hot spraying techniques, airless spraying techniques, etc. These application techniques can be performed manually or by using specially designed automated application machines such as robotic systems.

Prior to application of the coating materials of the present invention in automotive applications or when dealing with ferrous substrates, a conventional corrosion-resistant primer is typically applied to the substrate. To this primed substrate is applied the basecoat. The primer coatings which can be used to coat substrates prior to the application of the coatings of the present invention include cured cathodic electrocoat primers, such as cross-linked amine-epoxy resin adducts described in U.S. Pat. Nos. 4,575,224 and 4,575,523 which are incorporated by reference. Other types of conventional primers include epoxies, acrylics, alkyds, polyurethanes, and polyesters applied by spraying, brushing and the like. The applied primer coating is typically about 0.5 mil to about 1.0 mil thick. The basecoat is typically applied in a thickness of about 0.4 mil to about 2.0 mil and preferably about 0.5 mil to about 0.8 mil. The basecoat thickness can be produced in a single coating pass or by a plurality of passes with very brief drying ("flash") between applications.

Once the basecoat has been applied, it is typically allowed to flash dry at an ambient temperature for about 30 seconds to about 10 minutes, preferably about 1 to about 3 minutes; then a substantially transparent overcoat is applied. While the basecoat can be dried for longer periods of time, even at higher temperatures, a much improved product may be produced by application of the transparent topcoat after only a brief flash. Some drying out of the basecoat is necessary to prevent total mixing of the basecoat and topcoat. However, a minimal degree of basecoat-topcoat interaction is desirable for improved bonding of the coatings. The topcoat may be applied thicker than the basecoat (preferably about 1.8 to 2.3 mils) and can also be applied in a single or multiple pass.

Pigment control may be retained in the basecoat while it is being overcoated to optimize the aesthetic effect. This is evidenced by lack of "strike-in" or migration of the two films (the basecoat and topcoat) into each other. When "strike-in" occurs, pigments move from the basecoat into the topcoat; the film compositions become intermixed at the interface and the baked coating composition has a dusty appearance rather than a clear "depth" appearance. Pigment control or "strike-in" is typically prevented in the present invention by monitoring the process and by including additives in the basecoat which assist in this fashion, such as cellulose acetate butyrate, microgels, and high molecular weight monomers. However, sufficient wetting takes place at the interface so that no problems of delamination and solvent release from either coating are observed.

Once the topcoat is applied, the system is typically reflashed for 30 seconds to 10 minutes and the topcoat coatings are baked at temperatures sufficient to drive off the solvent in the case of thermoplastic layers and at temperatures sufficient to cure and cross-link in the case of thermosetting layers. These temperatures can range anywhere from ambient temperature to about 400'F. Typically in the case of thermosetting material temperatures of about 250°F. are used, (e.g., for about 30 minutes).

It will be appreciated by those skilled in the art that the coatings of the present invention will be applied in a manner suitable for the particular coating art employed such as printing, non-automotive coating applications, container coating and the like. Coating thicknesses and curing or drying mechanisms will similarly vary with the coating art.

Two coat systems employing the guanine containing compositions of the present invention were prepared as follows. All quantities are in % (w/w).

| Example | 1 | 2 | 3 | 4 | 5 |
|---|---|---|---|---|---|
| INGREDIENT | | | | | |
| g/p | 2/98 | 10/90 | 40/60 | 70/30 | 90/10 |
| microgel | 19.16 | 19.16 | 14.18 | 12.91 | 12.33 |
| Resimene X755 | 11.91 | 12.65 | 5.15 | 6.28 | 10.09 |
| Methanol | 4.00 | 4.00 | 3.21 | 3.18 | 3.28 |
| Acrylate resin | ------ | ------ | ------ | ------ | 5.01 |
| (1) | 55.40 | 51.00 | 62.81 | 47.66 | 21.33 |
| Guanine (2) | 0.27 | 1.27 | 9.52 | 25.28 | 43.49 |
| Fumed Silica (5) | 5.22 | 5.22 | 3.87 | 3.53 | 3.37 |
| Tinuvin 328 (3) | 0.80 | 0.80 | 0.59 | 0.53 | 0.49 |
| DDBSA (4) | 0.96 | 0.96 | 0.71 | 0.63 | 0.59 |
| Xylene | 2.28 | 4.94 | ------ | ------ | 0.02 |
| Total | 100.00 | 100.00 | 100.00 | 100.00 | 100.00 |
| % S.V. | 48.06 | 47.38 | 44.90 | 37.13 | 29.77 |
| % PIG. | 2.83 | 2.83 | 5.23 | 10.40 | 10.64 |
| % TNV | 50.89 | 50.21 | 50.13 | 47.53 | 40.41 |
| P/B | 0.06 | 0.06 | 0.12 | 0.28 | 0.36 |

Notes:
(1) a steel ball mill dispersion of 5.00 Cabot high color carbon black, 39.25 acrylate resin, 16.82 methylated melamine formaldehyde resin, 61.07% TNV.
(2) 22% pigment in solvent (as received)
(3) Ciba-Geigy Tinuvin 328 slurry in 75% xylene
(4) Di-dodecylbenzene sulfonic acid
(5) DeGussa R-805 fumed silica dispersion

Basecoats of compositions 1-5 were applied to 4" x 12" primed steel panels. The panels were flash dried for 5 minutes at a temperature ranging from ambient to 120°F, then a clearcoat comprised of E14DC020 D32509 was applied wet-on-wet. The panels were then baked for 30 minutes at 270°F.

The test panels exhibited the following results shown in table I.

TABLE I

COMPARISON OF APPEARANCES OF
TWO-COAT SYSTEMS OF EXAMPLES 2, 4, and 5

| Additive | Examples | | |
|---|---|---|---|
| | 2 10:90 | 4 70:30 | 5 90:10 |
| Aluminum | light gray metallic yellow undertone very specular | medium gray metallic yellow undertone very specular | medium-dark gray metallic yellow undertone very specular |
| mica | medium gray metallic rich blue undertone moderately specular | medium-dark gray metallic blue undertone moderately specular | dark gray metallic blue undertone moderately specular |
| Guanine | medium gray soft metallic rich yellow undertone slightly specular | medium gray soft metallic rich yellow undertone non-specular | jet black soft metallic deep blue undertone non-specular |

Eight interference coats were prepared as follows, four employing 90:10 ratio of guanine to colorant, four with a 70:30 ratio of guanine to colorant. The results are shown below in Tables II and III.

9

## TABLE II

## THREE COAT SYSTEM INTERFERENCE COAT COMPOSITION

### (90:10 guanine:colorant)

| Example | 6<br>RT343D | 7<br>264-4444 | 8<br>GF347 | 9<br>L2917 |
|---|---|---|---|---|
| microgel | 18.47 | 18.81 | 18.81 | ------ |
| ------ | ------ | ------ | ------ | 24.16 |
| Resimene X755 | 20.00 | 20.59 | 20.47 | 19.54 |
| Methanol | 4.00 | 4.00 | 4.00 | 4.00 |
| Acrylate resin | 21.19 | 23.47 | 23.16 | 23.24 |
| (1) | 4.50 | ------ | ------ | ------ |
| (2) | ------ | 2.47 | ------ | ------ |
| (3) | ------ | ------ | 3.70 | ------ |
| (4) | ------ | ------ | ------ | 1.87 |
| Guanine (5) | 18.64 | 15.14 | 15.14 | 18.41 |
| Tinuvin 328 (6) | 0.77 | 0.77 | 0.77 | 0.77 |
| Fumed silica (7) | 5.00 | 5.11 | 5.11 | ------ |
| DDBSA | 0.92 | 0.92 | 0.92 | 0.28 |
| Xylene | 6.51 | 8.87 | 7.92 | 7.73 |
| | ------ | ------ | ------ | ------ |
| Total: | 100.00 | 100.00 | 100.00 | 100.00 |
| % S.V. | 43.45 | 46.81 | 46.82 | 45.45 |
| % PIG. | 4.51 | 3.70 | 3.70 | 4.50 |
| % TNV | 47.96 | 50.51 | 50.52 | 49.95 |
| P/B | 0.10 | 0.08 | 0.08 | 0.10 |

10

### TABLE III
(70:30 guanine:colorant)

| Example | 10 | 11 | 12 | 13 |
|---|---|---|---|---|
| microgel | 18.12 | 18.47 | 18.47 | ------ |
| | ------ | ------ | ------ | 23.72 |
| Resimene X-755 | 18.48 | 19.54 | 19.09 | 19.19 |
| Methanol | 4.00 | 4.00 | 4.00 | 4.00 |
| Acrylate Resin | 10.95 | 13.44 | 14.06 | 15.18 |
| (1) | 16.10 | ------ | ------ | ------ |
| (2) | ------ | 9.07 | ------ | ------ |
| (3) | ------ | ------ | 13.60 | ------ |
| (4) | ------ | ------ | ------ | 6.71 |
| Guanine (5) | 17.04 | 14.45 | 14.45 | 17.64 |
| Tinuvin 328 (6) | 0.73 | 0.77 | 0.77 | 0.73 |
| Fumed Silica (7) | 5.00 | 5.00 | 5.00 | ------ |
| DDBSA | 0.88 | 0.77 | 0.77 | 0.28 |
| Xylene | 5.05 | 8.01 | 5.10 | 8.09 |
| | ------ | ------ | ------ | ------ |
| Total | 100.00 | 100.00 | 100.00 | 100.00 |
| % S.V. | 44.73 | 44.48 | 45.95 | 44.64 |
| % PIG. | 5.36 | 4.54 | 4.54 | 5.49 |
| % TNV | 50.09 | 49.38 | 50.49 | 50.13 |
| P/B | 0.12 | 0.10 | 0.10 | 0.12 |

Notes:   (1)   Attritor dispersion of 10.00 Quinacridone Magenta(Ciba-Geigy), 40.00 acrylate resin, (BASF), 9.99 methylated melamine formaldehyde resin 59.99% TNV.

(2)   Sand grind (vertical mill) a dispersion of 15.00 Phthalo Green (Sun Chemical), 35.31 acrylate resin (BASF), 10.00 methylated melamine-formaldehyde resin, 60.31% TNV.

(3)   Sand grind (vertical mill)dispersion of

10.00 Phthalo Blue (Sanyo), 30.00 acrylate resin (BASF), 10.00 methylated melamine formaldehyde resin, 50.00% TNV

(4)  Attritor dispersion of 24.00% transparent red iron oxide (BASF) 40.00% acrylate resin (BASF), 64.00%  TNV

(5)  22% pigment in solvent (as received)

(6)  Ciba-Geigy Tinuvin 328 slurry in 75% xylene

(7)  DeGussa R-805 fumed silica dispersion

A typical 1000 lb batch of the coating composition of Example 10 is prepared as follows:
(1) Thoroughly mix together 181.2 lbs microgel and 184.8 lbs Resimene X755 with sufficient agitation to stabilize the blend;
(2) Add 109.5 lbs acrylic resin, 161.0 lbs red tint paste, 170.4 lbs guanine dispersion, 50.00 lbs DeGussa R-805 fumed silica dispersion, 7.3 lbs Ciba-Geigy Tinuvin 328, slurry in 75% xylene, 8.8 lbs di-dodecyl benzene sulfonic acid and 50.5 lbs xylene
(3) adjust for color and viscosity, check for % nv, weight/gallon, and v.o.c.

A 100% black basecoat was applied on eight 4" x12" primed steel panels, and baked 30 minutes at 250°F. Interference coats formulated as in examples 6-13 were applied to the panels, high-solids acrylic clearcoats were applied wet-on-wet over the interference coat, and baked 30 minutes at 270°F.

Additives for the formulations of examples 6 to 13 are described below, taking into account the effect of aluminum and guanine.

THREE COAT SYSTEM: 100% Jet Black Base Coat
(90:10 Metal:Colorant)

Examples

| Additive | 6 | 7 | 8 | 9 |
|---|---|---|---|---|
| Aluminum | very light red blue face / gray blue flop / very specular | very light green gray face / deep green gray flop / very specular | very light blue gray face / blue gray flop / very specular | light gold gray face / deep gray flop / very specular |
| Guanine | rich red blue gray face / deep clean red flop / non-specular | rich green yellow face / rich green very yellow flop / non-specular | rich blue gray green face / deep rich red flop / non-specular | rich red orange face / deep orange flop / non-specular |

Examples

| Additive | 10 | 11 | 12 | 13 |
|---|---|---|---|---|
| Aluminum | light red metallic face / blue-gray flop / very specular | light yellow green face / gray yellow green flop / very specular | light blue red face / deep red blue flop / very specular | rich gold face / deep gray cold flop / very specular |
| Guanine | deep-soft red face / clean rich red flop / non-specular | deep yellow green face / deep gray green flop / non-specular | rich clean blue red face / deep clean rich red flop / non-specular | rich red face / rich red flop / non-specular |

Other systems using either basecoat/clearcoat or the one pack coating system that are applicable to these unique opalescent color effects include water-borne systems; polyester/polyurethane systems; low solids systems, either of alkyd basecoat and acrylic clearcoat or of solution and dispersion lacquers; and either urethanes or acrylics in both the basecoat and clearcoat.

Chromaticity was determined by visual evaluation of the purity of the color, as referenced to the Munsell color standard. The purity or chromaticity was related to the Munsell reference by the perception of various degrees of contamination with white or black tones.

Although this invention has been shown and described with respect to detailed embodiments thereof, it will be understood by those skilled in the art that various changes in form and detail thereof may be made without departing from the spirit and scope of this claimed invention.

**Claims**

1. A coating composition for producing a novel opalescent color effect which adds a subtle patina to the coated article comprising a binder, guanine, other substantially transparent pigments, and optionally metal or metal like pigments, substantially free of other pigments, in wich the guanine to total pigment ratio is between 0.10 and 0.70 and the pigment to binder ratio is between 0.04 and 0.35.

2. A coating composition for producing a novel opalescent color effect which adds a subtle patina to the coated article comprising a binder, guanine, and a black pigment, substantially free of other pigments, in wich the guanine to total pigment ratio is between 0.10 and 0.70 and the pigment to binder ratio is between 0.04 and 0.35.

3. The coating composition of claim 1, in wich the metal or metal-like pigment to total pigment ratio is between 0.001 and 0.50 and the metal or metal-like pigment to guanine ratio is 0.01 to 0.20.

4. A method of coating a substrate with at last two layers of protective coatings comprising
   (1) applying a basecoat;
   (2) optionally applying an interference coat; and
   (3) applying a substantially transparent topcoat onto the basecoat respectively onto the interference coat, wherein a coating composition according to claims 1 to 3 is applied as basecoat or as interference coat.

5. A substrate material coated with at last two layers of protective coatings comprising
   (1) a basecoat;
   (2) optionally an interference coat; and
   (3) a substantially transparent topcoat , wherein the basecoat or the interference coat is formed by a coating composition according to claims 1 to 3.

**Patentansprüche**

1. Überzugszusammensetzungen zur Erzielung neuartiger opaleszierender Farbeffekte, die dem lackierten Gegenstand eine zusätzliche feine Patina verleihen und aus einem Bindemittel, Guanin, weiteren im wesentlichen transparenten Pigmenten und gegebenenfalls Metall- oder metallähnlichen Pigmenten bestehen, die im wesentlichen frei von anderen Pigmenten sind und bei denen das Guanin-Gesamtpigment-Verhältnis zwischen 0,10 und 0,70 und das Pigment-Bindemittel-Verhältnis zwischen 0,04 und 0,35 liegt.

2. Überzugszusammensetzungen zur Erzielung neuartiger opaleszierender Farbeffekte, die dem lackierten Gegenstand eine zusätzliche feine Patina verleihen und aus einem Bindemittel, Guanin und einem Schwarzpigment bestehen, die im wesentlichen frei von anderen Pigmenten sind und bei denen das Guanin-Gesamtpigment-Verhältnis zwischen 0,10 und 0,70 und das Pigment-Bindemittel-Verhältnis zwischen 0,04 und 0,35 liegt.

3. Überzugszusammensetzungen nach Anspruch 1, wobei das Verhältnis von Metall- bzw. metallähnlichem Pigment zu Gesamtpigment zwischen 0,001 und 0,50 und das Verhältnis von Metall- bzw. metallähnlichem Pigment zu Guanin zwischen 0,01 und 0,20 liegt.

4. Verfahren zur Lackierung eines Substrats mit mindestens zwei Schutzlackschichten, das darin besteht, daß
   (1) ein Basislack,
   (2) gegebenenfalls ein Interferenzlack und
   (3) ein im wesentlichen transparenter Decklack auf den Basislack bzw. den Interferenzlack aufgebracht werden, wobei als Basislack bzw. Interferenzlack eine Überzugszusammensetzung nach Ansprüchen 1 bis 3 aufgebracht wird.

5. Substratmaterial, das mit mindestens zwei Schutzlackschichten aus
   (1) einem Basislack,
   (2) gegebenenfalls einem Interferenzlack und

(3) einem im wesentlichen transparenten Decklack lackiert wird, wobei der Basislack bzw. der Interferenzlack unter Verwendung einer Überzugszusammensetzung nach Ansprüchen 1 bis 3 gebildet wird.

**Revendications**

1. Composition de revêtement pour produire un nouvel effet de couleur opalescente qui ajoute une patine subtile à un article revêtu, comprenant un liant, de la guanine, d'autres pigments pratiquement transparents et éventuellement des pigments métalliques ou de type métallique, pratiquement dépourvue d'autres pigments, dans laquelle le rapport de la guanine au pigment total est compris entre 0,10 et 0,70, et le rapport du pigment au liant est compris entre 0,04 et 0,35.

2. Composition de revêtement pour produire un nouvel effet de couleur opalescente qui ajoute une patine subtile à un article revêtu, comprenant un liant, de la guanine et un pigment noir, pratiquement dépourvue d'autres pigments, dans laquelle le rapport de la guanine au pigment total est compris entre 0,10 et 0,70, et le rapport du pigment au liant est compris entre 0,04 et 0,35.

3. Composition de revêtement de la revendication 1, dans laquelle le rapport du pigment métallique ou de type métallique au pigment total est compris entre 0,001 et 0,50, et le rapport du pigment métallique ou de type métallique à la guanine est de 0,01 à 0,20.

4. Procédé de revêtement d'un substrat avec au moins deux couches de revêtements protecteurs, comprenant les étapes qui consistent à
   (1) appliquer une couche de base;
   (2) éventuellement appliquer une couche irisée; et
   (3) appliquer une couche de finition pratiquement transparente sur la couche de base, respectivement sur la couche irisée,
   dans lequel une couche de revêtement selon les revendications 1 à 3 est appliquée comme couche de base ou comme couche irisée.

5. Matière de substrat revêtue d'au moins deux couches de revêtements protecteurs comprenant
   1) une couche de base;
   (2) éventuellement une couche irisée; et
   (3) une couche de finition pratiquement transparente,
   dans laquelle la couche de base ou la couche irisée est constituée d'une composition de revêtement selon les revendications 1 à 3.